# EUROPEAN PATENT SPECIFICATION

(11) **EP 3 663 559 B1**
(45) Date of publication and mention of the grant of the patent: **16.11.2022**
(21) Application number: 18841581.4
(22) Date of filing: 02.08.2018
(51) Int. Cl.: B62M 23/02, F02B 61/02, F02B 61/06, F02N 15/00, F02N 15/04, F16F 15/26, B62M 7/02, F02N 11/00

(54) **ENGINE AND VEHICLE**
MOTOR UND FAHRZEUG
MOTEUR ET VÉHICULE

(30) Priority: 03.08.2017 JP 2017150855
(43) Date of publication of application: 10.06.2020
(73) Proprietor: Yamaha Hatsudoki Kabushiki Kaisha, Iwata-shi, Shizuoka 438-8501 (JP)
(72) Inventor: WAKUDA, Masahiro, Iwata-shi Shizuoka 438-8501 (JP)
(74) Representative: Grünecker Patent- und Rechtsanwälte PartG mbB
(86) International application number: PCT/JP2018/028980
(87) International publication number: WO 2019/026988

(56) References cited:
- EP-A2- 1 228 956
- JP-A- S61 187 533
- JP-A- 2001 171 585
- JP-A- 2003 237 657
- JP-A- 2006 316 679
- JP-A- 2010 228 736
- JP-A- 2014 227 970
- US-A1- 2003 047 156
- US-A1- 2005 109 305

## Description

### [TECHNICAL FIELD]

The present invention relates to a single-cylinder type engine provided with a motor that starts the rotation of a crankshaft.

### [BACKGROUND]

An engine generally known starts the rotation of a crankshaft using a motor called a starter motor, for example. According to a layout disclosed in relation to an engine described in patent literature 1, a cylinder is tilted rearward to ensure space for the arrangement of a motor on the front side of the cylinder. A single-cylinder type engine according to the preamble of independent claim 1 is disclosed in patent literature 2.

### [CITATION LIST]

### [PATENT LITERATURE]

[PTL 1] JP5539602
[PTL 2] JP-A-2010-228736

### [SUMMARY]

### [TECHNICAL PLOBLEM]

The foregoing layout has an advantage of allowing the arrangement of the motor through effective use of the space on the front side of the cylinder. If the motor has a large size, however, the cylinder is required to be tilted rearward largely as shown in patent literature 1, for example. This makes it difficult to ensure space on the rear side of the cylinder.

The present invention has been made in view of the foregoing problem, and is intended to provide a technique capable of ensuring space for the arrangement of a motor while suppressing the tilt of a cylinder.

### [SOLUTION TO PLOBLEM]

A single-cylinder type engine according to the invention comprises: a cylinder; a crankcase in mating contact with the cylinder at a cylinder mating surface and attached to the cylinder; a crankshaft rotatable about a crank axis, at least a part of the crankshaft being arranged in the crankcase; a transmission that outputs the rotation of the crankshaft from a drive shaft rotatable about a drive axis, at least a part of the transmission being arranged in the crankcase; a motor; and multiple gears that reduce an output of the motor and transmit a reduced outputs to the crankshaft, wherein the cylinder is tilted toward the transmission so that an angle between a virtual half line and a virtual line segment is less than 90°, the virtual half line extending parallel to an axis of the cylinder toward the cylinder from the crank axis, the virtual line segment extending between the crank axis and the drive axis, and the motor is arranged on the opposite side of the transmission across the cylinder and on the opposite side of the crankshaft across the cylinder mating surface, with a rotational axis of the motor being parallel to the crankshaft.

In the present invention (engine) having the foregoing configuration, the cylinder is tilted toward the transmission so that the angle between the virtual half line starting from the crank axis and extending parallel to the axis of the cylinder toward the cylinder, and the virtual line segment between the crank axis and the drive axis is less than 90°. By tilting the cylinder toward the transmission in this way, it becomes possible to ensure wide space on the opposite side of the transmission across the cylinder. The motor is arranged on the opposite side of the transmission across the cylinder and on the opposite side of the crankshaft across the cylinder mating surface. In this way, the motor is arranged through effective use of the space on the opposite side of the transmission across the cylinder. Further, in the present invention, the output of the motor is reduced in speed by the multiple gears and then transmitted to the crankshaft. Thus, output required for the motor is small to allow size reduction of the motor. As a result, it becomes possible to ensure space for the arrangement of the motor while the tilt of the cylinder is suppressed.

The single-cylinder type engine may be configured so that the multiple gears include a driving gear attached to an output shaft of the motor, a driven gear attached to the crankshaft, and a double gear located between the driving gear and the driven gear on a transmission path of driving force, the double gear including an input side gear and an output side gear arranged coaxially, the input side gear receiving the driving force from the driving gear, the output side gear outputting the driving force to the driven gear, and the multiple gears reduce the output of the motor and transmit the reduced output to the crankshaft. Such speed reduction at multiple states using the double gear can encourage size reduction of the motor effectively. As a result, while the tilt of the cylinder is suppresses, it becomes possible to ensure space for the arrangement of the motor more reliably.

The single-cylinder type engine may be configured so that as viewed from a direction of the rotational axis of the motor, at least one of the multiple gears other than the driving gear and the driven gear has a rotational axis located closer to the crankshaft than the rotational axis of the motor in a direction parallel to the cylinder mating surface. This configuration reduces bulge of the engine to contribute to size reduction of the engine.

The single-cylinder type engine may be configured so that as viewed from a direction of the rotational axis of the motor, each gear of the multiple gears other than the driving gear and the driven gear has a rotational axis located closer to the crankshaft than the rotational axis of the motor in a direction parallel to the cylinder mating surface. This configuration reduces bulge of the engine to contribute to size reduction of the engine more effectively.

The single-cylinder type engine may further comprises a motor case housing the motor, wherein as viewed from a direction of the rotational axis of the motor, respective far-side end portions of the multiple gears from an axis of the cylinder are located closer to the axis of the cylinder than a far-side end portion of the motor case from the axis of the cylinder in a direction parallel to the cylinder mating surface. This configuration reduces bulge of the engine to allow size reduction of the engine.

The single-cylinder type engine may be configured so that as viewed from a direction of the rotational axis of the motor, the rotational axis of the motor is located closer to an axis of the cylinder than a line passing through the rotational axis of a gear other than the driving gear and the driven gear and the crank axis. This configuration reduces bulge of the engine to allow size reduction of the engine.

A vehicle according to the invention comprises: the foregoing engine; and a wheel to be driven by the single-cylinder type engine. Thus, while the tile of the cylinder is suppressed, space for the arrangement of the motor can be ensured.

### [ADVANTAGEOUS EFFECTS OF INVENTION]

The present invention ensures space for the arrangement of the motor while the tile of the cylinder is suppressed.

### [BRIEF DESCRIPTION OF DRAWINGS]

Fig. 1 is a side view showing a motorcycle corresponding to an example of a straddled vehicle equipped with a single-cylinder type engine according to the present invention.
Fig. 2 is a partial cross-sectional view showing the internal configuration of a single-cylinder type engine taken at a substantially central cross section.
Fig. 3 is a partial cross-sectional view showing the internal configuration of the single-cylinder type engine taken at a cross section external to the cross-section of Fig. 2.
Fig. 4 is a partial cross-sectional view of the single-cylinder type engine taken along a cutting line IV-IV shown in Fig. 3.
Fig. 5 is a partial cross-sectional view showing a mechanism of transmitting a torque from a starter motor to a crankshaft.
Fig. 6 is a partial cross-sectional view of the single-cylinder type engine taken along a cutting line VI-VI shown in Fig. 5.
Fig. 7 schematically shows the layout of the starter motor.

### [DESCRIPTION OF EMBODIMENTS]

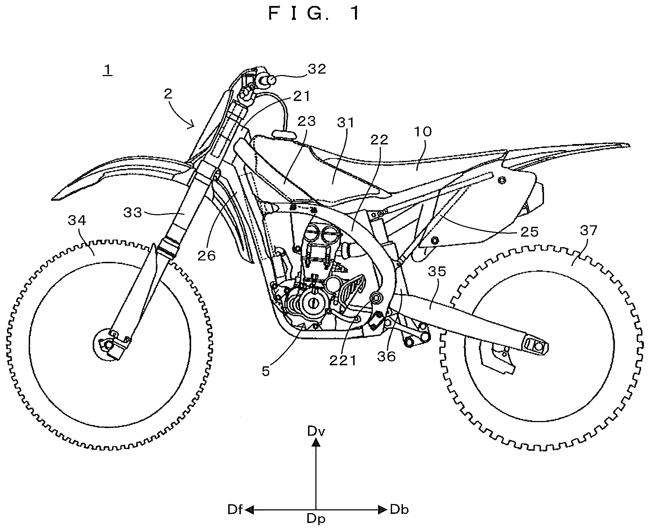

Fig. 1 is a side view showing a motorcycle corresponding to an example of a straddled vehicle equipped with a single-cylinder type engine according to the present invention. A motorcycle 1 shown in Fig. 1 is so-called an off-road type vehicle. Meanwhile, in addition to this type, the straddled vehicle includes motorcycles of an on-road type, a scooter-type, a so-called moped-type, etc. The vehicle according to the present invention includes not only the straddled vehicle but also includes an all terrain vehicle (ATV), a four-wheel buggy, etc.

In this description, front, rear, left, and right means a front side, a rear side, a left side, and a right side respectively viewed from a passenger on a seat 10. A front-rear direction Dp, a front side Df in the front-rear direction Dp, a rear side Db in the front-rear direction Dp, a vehicle-width direction Dw, and a vertical direction Dv are shown, where appropriate. Each of the front-rear direction Dp and the vehicle-width direction Dw is a horizontal direction. The front-rear direction Dp, the vehicle-width direction Dw, and the vertical direction Dv are orthogonal to each other.

The motorcycle 1 includes a vehicle body frame 2. The vehicle body frame 2 has a head pipe 21, a main frame 22, a tank rail 23, a seat rail 24, a back stay 25, a down frame 26, etc. The head pipe 21 is arranged at an end portion of the vehicle body frame 2 on the front side Df. The main frame 22 extends from the head pipe 21 toward the rear side Db and is bent downward. The tank rail 23 is arranged between the head pipe 21 and the tank rail 23. A fuel tank 31 is attached to the tank rail 23. The seat rail 24 extends from the main frame 22 toward the rear side Db. The seat 10 is attached to the seat rail 24. An end portion of the seat rail 24 on the rear side Db is connected to the main frame 22 with the back stay 25. The down frame 26 extends downward from the head pipe 21 and is bent toward the rear side Db. Respective end portions of the down frame 26 and the main frame 22 on the rear side Db are connected to each other.

A steering shaft not shown in the drawings is rotatably inserted into the head pipe 21. The steering shaft has an upper end portion to which a handle 32 is attached. A front fork 33 extending diagonally downward toward the front side Df is attached to the steering shaft. The front fork 33 has a lower end portion to which a front wheel 34 is attached rotatably.

A pivot shaft 221 is attached to an end portion of the main frame 22 on the rear side Db. A rear arm 35 extends from the pivot shaft 221 toward the rear side Db. While the rear arm 35 is supported by the pivot shaft 221 so as to be pivotable upward and downward (vertical direction Dv) about the pivot shaft 221, the rear arm 35 is attached to the main frame 22 via a gear suspension 36. A rear wheel 37 is rotatably attached to an end portion of the rear arm 35 on the rear side Db.

An engine 5 is mounted to the vehicle body frame 2 in a region surrounded by the main frame 22 and the down frame 26. The engine 5 rotates the rear wheel 37 via a secondary speed reducer not shown in the drawings. The secondary speed reducer can use any one of a chain-driven system, a shaft-driven system, and a belt-driven system.

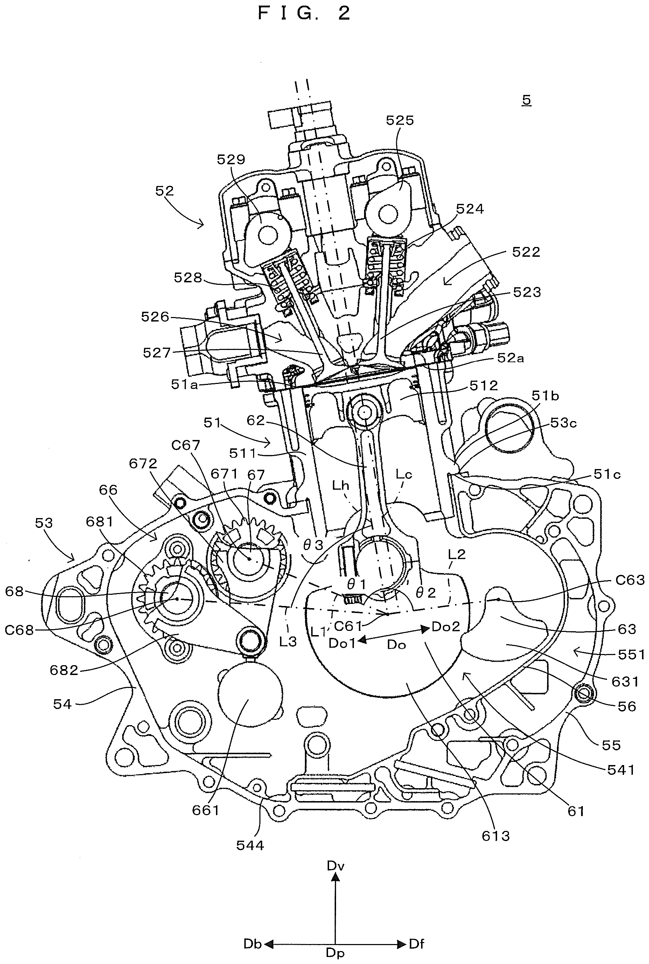

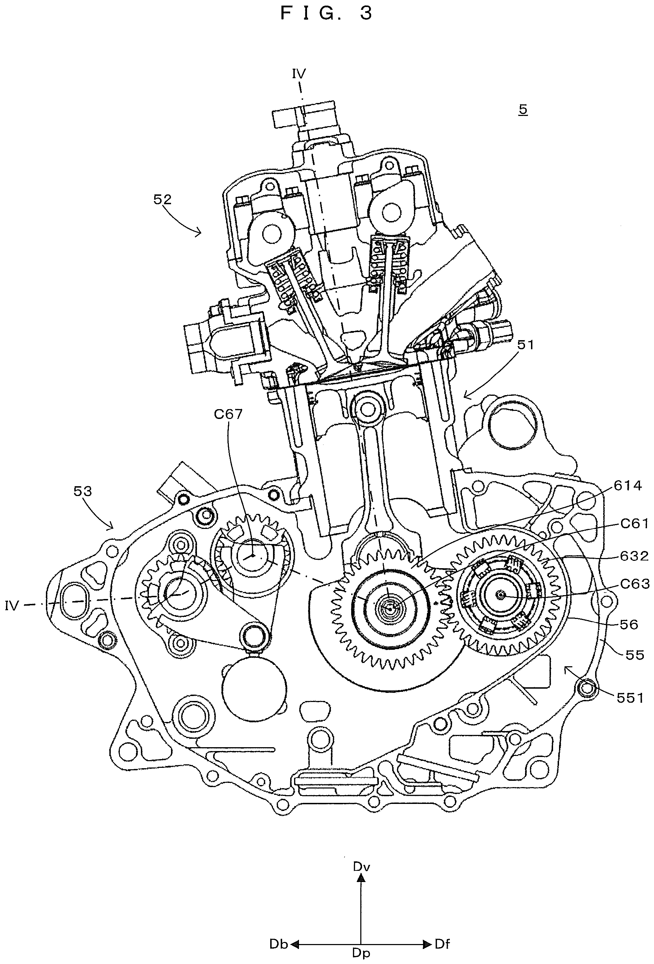

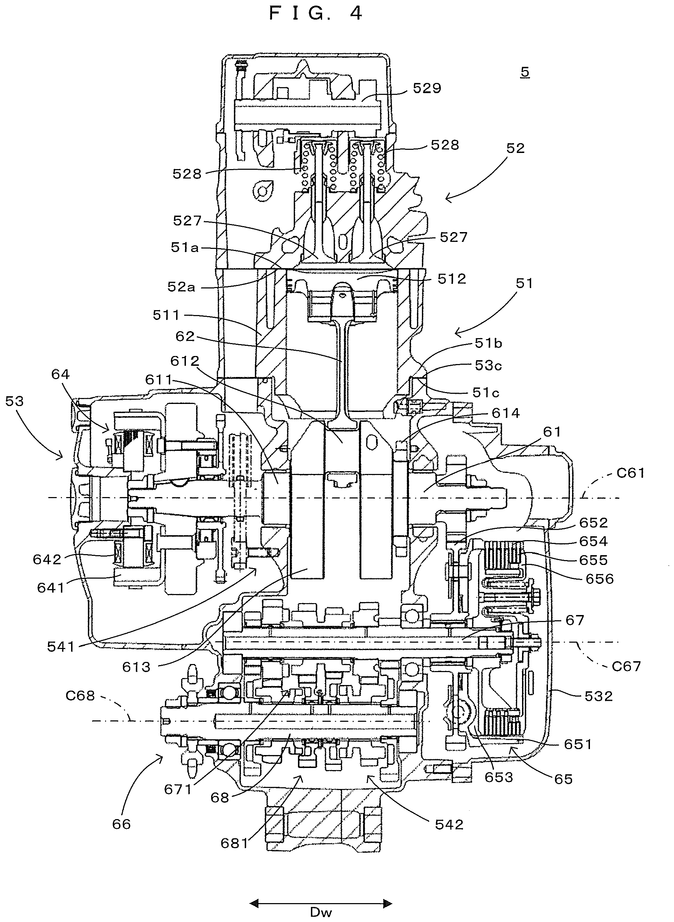

Fig. 2 is a partial cross-sectional view showing the internal configuration of an engine taken at a substantially central cross section. Fig. 3 is a partial cross-sectional view showing the internal configuration of the engine taken at a cross section external to the cross-section of Fig. 2. Fig. 4 is a partial cross-sectional view of the engine taken along a cutting line IV-IV shown in Fig. 3. The engine 5 includes a cylinder block 51, a cylinder head 52 attached to the upper end of the cylinder block 51, and a crankcase 53 attached to the lower end of the cylinder block 51. The cylinder block 51 has a head mating surface 51a as a surface of mating to the cylinder head 52. The cylinder head 52 has a cylinder mating surface 52a as a surface of mating to the cylinder block 51. With the head mating surface 51a of the cylinder block 51 and the cylinder mating surface 52a of the cylinder head 52 in mating contact with each other, the cylinder block 51 and the cylinder head 52 are attached to each other. The cylinder block 51 has an outer peripheral surface provided with a flange 51b. The flange 51b has a crank mating surface 51c as a surface of mating to the crankcase 53. The crankcase 53 has a cylinder mating surface 53c as a surface of mating to the cylinder block 51. With the crank mating surface 51c of the cylinder block 51 and the cylinder mating surface 53c of the crankcase 53 in mating contact with each other, the cylinder block 51 and the crankcase 53 are attached to each other.

The engine 5 is a single-cylinder type engine with a single cylinder 511 provided at the cylinder block 51. A piston 512 is arranged in the cylinder 511. The piston 512 can make reciprocating motion in the cylinder 511. The cylinder 511 is inclined rearward. More specifically, an axis Lc of the cylinder 511 is inclined toward the rear side Db with respect to the vertical direction Dv. In other words, the axis Lc of the cylinder 511 is inclined further toward the rear side Db at a higher position. The axis Lc of the cylinder 511 can be determined as a virtual line passing through the center of a bore in the cylinder 511 and extending parallel to the direction of the stroke of the piston 512, for example.

The cylinder head 52 includes an intake port 522 communicating with a combustion chamber defined between the cylinder head 52 and the upper end surface of the piston 512, and an intake valve 523 for opening and closing the intake port 522 for the combustion chamber. The intake valve 523 is biased by a valve spring 524 to be located at a position of closing the intake port 522. Rotating a camshaft 525 contacting with the upper end of the intake valve 523 allows opening and closing of the intake valve 523. The cylinder head 52 includes an exhaust port 526 communicating with the combustion chamber, and an exhaust valve 527 for opening and closing the exhaust port 526 for the combustion chamber. The exhaust valve 527 is biased by a valve spring 528 to be located at a position of closing the exhaust port 526. Rotating a camshaft 529 contacting with the upper end of the exhaust valve 527 allows opening and closing of the exhaust valve 527. In this way, the engine 5 has an intake and exhaust valve mechanism of a double over head camshaft (DOHC) type with the camshafts 525 and 529 provided on an intake side and an exhaust side respectively. The engine 5 has a multivalve mechanism with multiple (two) intake valves 523 and multiple (two) exhaust valves 527.

The crankcase 53 includes a housing part 54 housing the mechanical structures of the engine 5, and a reservoir part 55 (oil tank) storing engine oil circulating in the engine 5. The housing part 54 and the reservoir part 55 are separated by a partition 56. Further, the housing part 54 includes a crank chamber 541 inside.

The crank chamber 541 communicates with the cylinder 511 and houses a crankshaft 61 arranged parallel to the vehicle-width direction Dw. The crankshaft 61 includes a crank journal 611 supported by the crankcase 53 so as to be rotatable about a crank axis C61 parallel to the vehicle-width direction Dw, and a crank pin 612 eccentric with respect to the crank axis C61. The crank pin 612 is connected to the piston 512 with a connecting rod 62. The crankshaft 61 rotates about a crank axis C61 in conjunction with the reciprocating motion of the piston 512. The crankshaft 61 includes a counterweight 613 eccentric with respect to the crank axis C61 toward the opposite side of the crank pin 612. The counterweight 613 contributes to reduction of vibration.

The crank chamber 541 houses a balance shaft 63 arranged parallel to the vehicle-width direction Dw. The balance shaft 63 is supported by the crankcase 53 so as to be rotatable about a balancer axis C63 parallel to the vehicle-width direction Dw, and includes a weight 631 eccentric with respect to the balancer axis C63. The balance shaft 63 rotates in conjunction with the rotation of the crankshaft 61 to reduce vibration of the crankshaft 61.

A primary drive gear 614 is attached to the crankshaft 61 to be coaxial with the crankshaft 61. The primary drive gear 614 rotates together with the crankshaft 61 about the crank axis C61. Further, a balancer gear 632 is attached to the balance shaft 63 to be coaxial with the balance shaft 63. The balance shaft 63 rotates together with the balancer gear 632 about the balancer axis C63. The primary drive gear 614 and the balancer gear 632 are engaged with each other, the reduced rotation of the crankshaft 61 is transmitted to the balance shaft 63.

The engine 5 includes a generator 64 that generates power from the rotary motion of the crankshaft 61. The generator 64 includes a flywheel 641 and a stator coil 642 arranged inside the flywheel 641. The flywheel 641 is attached to the crankshaft 61 to be coaxial with the crankshaft 61, and rotatable about the crank axis C61 together with the crankshaft 61. The flywheel 641 includes N-pole magnets and S-pole magnets aligned alternately to surround the stator coil 642 from outside. The generator 64 generates power in response to electromagnetic induction generated between the magnets and the stator coil 642 by the rotation of the flywheel 641.

The crank chamber 541 further houses a clutch mechanism 65 and a transmission 66. As shown in Fig. 4, an end portion of the crankcase 53 in the vehicle-width direction Dw forms a clutch box 532 covering the clutch mechanism 65 and projects further than the cylinder 511 in the vehicle-width direction Dw. The clutch mechanism 65 includes a clutch housing 651 rotatable about a main axis C67 parallel to the vehicle-width direction Dw. The clutch housing 65 has an outer periphery provided with a primary driven gear 652 centered on a main axis C65. The primary drive gear 614 and the primary driven gear 652 are engaged with each other to form a primary speed reducer of reducing the rotation of the crankshaft 61 and transmitting it to the clutch housing 651.

In the clutch mechanism 65, a clutch boss 653 rotatable about the main axis C67 is arranged inside the clutch housing 651. Further, friction plates 654 to rotate together with the clutch housing 651 and clutch plates 655 to rotate together with the clutch boss 653 are aligned alternately. The clutch mechanism 65 further includes a pressure part 656 biased toward the clutch boss 653 by the elastic force of a clutch spring. The clutch mechanism 65 presses the friction plates 654 and the clutch plates 655 to the clutch boss 653 by the pressure part 656 to allow transmission of the rotation of the clutch housing 651 to the clutch boss 653. In another case, the clutch mechanism 65 moves pressure part 656 toward the opposite side of the clutch boss 653 against the elastic force of the clutch spring to allow interruption of transmission of the rotation from the clutch housing 651 to the clutch boss 653.

A main shaft 67 of the transmission 66 is attached to the clutch boss 653. Thus, the clutch mechanism 65 can make transmitting motion of transmitting power from the crankshaft 61 to the main shaft 67 and interrupting motion of interrupting transmission of the power from the crankshaft 61 to the main shaft 67 selectively.

The transmission 66 includes the main shaft 67 and a drive shaft 68 both arranged parallel to the vehicle-width direction Dw. The main shaft 67 is supported by the crankcase 53 so as to be rotatable about the main axis C67. The drive shaft 68 is supported by the crankcase 53 so as to be rotatable about a drive axis C68 parallel to the vehicle-width direction Dw. The main shaft 67 is provided with a plurality of gears 671 forming a part of the transmission 66. Thus, the weight of the main shaft 67 including the plurality of gears 671 is generally larger than that of the foregoing balance shaft 63. The main shaft 67 is further provided with a shift fork 672 for causing the gears 671 to slide toward the axis direction of the main shaft 67 (vehicle-width direction Dw). The drive shaft 68 is provided with a plurality of gears 681, and a shift fork 682 for causing the gears 681 to slide toward the axis direction of the drive shaft 68 (vehicle-width direction Dw). A shift drum 661 to rotate in response to driver's operation is provided for the shift forks 672 and 682. The shift forks 672 and 682 move the gear 671 and the gear 681 respectively located at their positions corresponding to the rotation angle of the shift drum 661. In this way, the transmission 66 transmits the rotation of the main shaft 67 to the drive shaft 68 at a transmission gear ratio responsive to the driver's operation. The rotation of the drive shaft 68 is transmitted to the rear wheel 37 by the secondary speed reducer.

As described above, the engine oil is cyclically supplied to the crank chamber 54. The bottom of the crank chamber 541 functions as an oil pan 544 to receive the engine oil dripping by its own weight.

The reservoir part 55 stores the engine oil in a reservoir chamber 551 inside the reservoir part 55. The reservoir chamber 551 is arranged on the front side Df of the crank chamber 541 and overlaps the crank chamber 541 at least partially in a front view from the front side Df. The engine oil has a composition containing mineral-based oil, chemically synthesized oil, or partially chemically synthesized oil as base oil, and an adder added to the base oil. The engine oil is circulated in the engine 5 by a pump (scavenge pump or feed pump). This pump is driven by using the rotation of the crankshaft 61. More specifically, a pump gear (not shown in the drawings) engaging with the primary drive gear 614 is attached to the pump to be coaxial with the pump. The primary drive gear 614 and the pump gear transmit the rotation of the crankshaft 61 to the pump.

The following describes layout in the engine 5 in detail taken in a side view from the axis direction of the crankshaft 61 (namely, from the vehicle-width direction Dw) shown in Fig. 2. The crankshaft 61, the balance shaft 63, the main shaft 67, and the drive shaft 68 are arranged parallel to each other. As shown in Fig. 2, the crankshaft 61 is offset rearward from the axis Lc of the cylinder 511. More specifically, a virtual half line Lh starting from the crank axis C61 of the crankshaft 61 and extending parallel to the axis Lc of the cylinder 511 toward the cylinder 511 is located rearward of the axis Lc of the cylinder 511. From a different viewpoint, in an offset direction Do normal to each of the axis Lc of the cylinder 511 and the crank axis C61, the axis Lc of the cylinder 511 is located closer to the balance shaft 63 than the virtual half line Lh. In this way, the crank axis C61 (or virtual half line Lh) is located on one side Do1 of the offset direction Do in respect with the axis Lc of the cylinder 511 , and the balance shaft 63 is located on the other side Do2 of the offset direction Do in respect with the axis Lc of the cylinder 511. The other side Do2 is opposite to the one side Do1.

The balance shaft 63 is arranged on the opposite side of the main shaft 67 across the virtual half line Lh. "The balance shaft 63 being arranged on the opposite side of the main shaft 67 across the virtual half line Lh" has the same meaning as the balance shaft 63 being arranged on the opposite side of the main shaft 67 across a virtual line passing through the crank axis C61 and extending parallel to the axis Lc of the cylinder 511. An angle θ1 (0° < θ1 < 90°) is provided between the virtual half line Lh and a first virtual line segment L1 between the main axis C67 and the crank axis C61. Further, an angle θ2 (0° < θ2) is provided between the virtual half line Lh and a second virtual line segment L2 between the balancer axis C63 and the crank axis C61. The crankshaft 61, the balance shaft 63, and the main shaft 67 are arranged so as to fulfill a relationship of angle θ1 < angle θ2.

With the engine 5 mounted to the vehicle body frame 2, the transmission 66 is located on the rear side Db in respect with the crankshaft 61. An angle θ3 is provided between the virtual half line Lh and a third virtual line segment L3 between the drive axis C68 and the crank axis C61. The cylinder 511 is tilted toward the transmission 66 so as to make the angle θ3 less than 90° (0° < θ3 < 90°). In this case, the position of the drive shaft 68 of the transmission 66 is generally located near the pivot shaft 221. Thus, like the tilt toward the drive shaft 68, the cylinder 511 becomes tilted toward the pivot shaft 221.

A line segment and a half line form a major angle (an angle greater than 180 degrees) and a minor angle (an angle less than 180 degrees), and an angle therebetween described herein means the minor angle. Specifically, all the angle θ1, the angle θ2, and the angle θ3 are smaller than 180 degrees. The axis Lc, the virtual half line Lh, the first virtual line segment L1, the second virtual line segment L2, and the third virtual line segment L3 mentioned herein are all normal to the axis direction of the crankshaft 61 (vehicle-width direction Dw).

In the engine 5 having the foregoing configuration, the respective masses of the main shaft 67 and the balance shaft 63 are distributed to the opposite sides of the virtual half line Lh starting from the crank axis C61 and extending parallel to the axis Lc of the cylinder 511 toward the cylinder 511. Hence, the arrangement of the main shaft 67 influences mass centralization. In this regard, in this embodiment, the main shaft 67 is arranged so as to fulfill the relationship of angle θ1 < angle θ2. More specifically, to encourage mass centralization, the main shaft 67 is arranged close to the virtual half line Lh starting from the crank axis C61 so as to fulfill this angular relationship. By doing so, mass centralization can be encouraged in the engine 5 provided with the main shaft 67, the crankshaft 61, and the balance shaft 63.

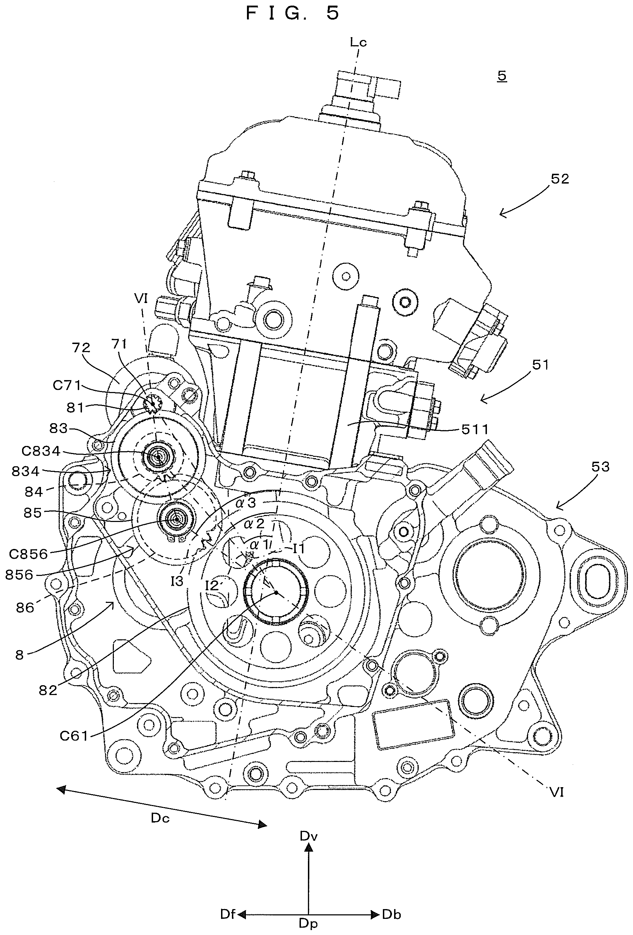

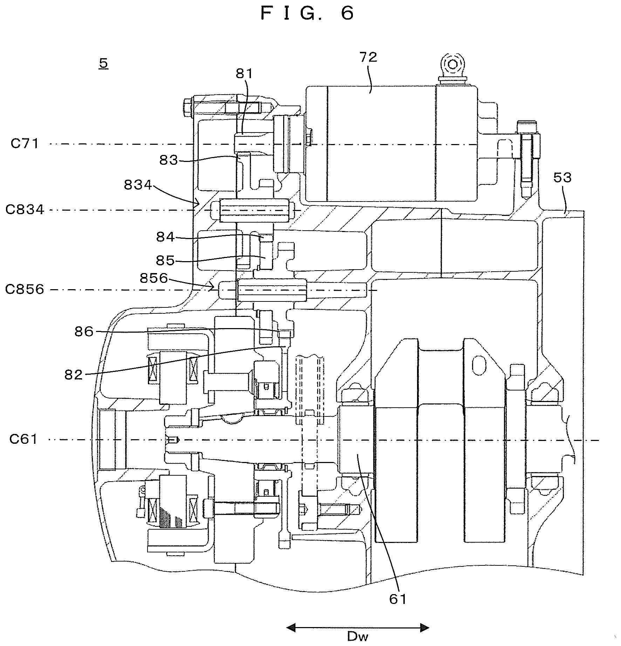

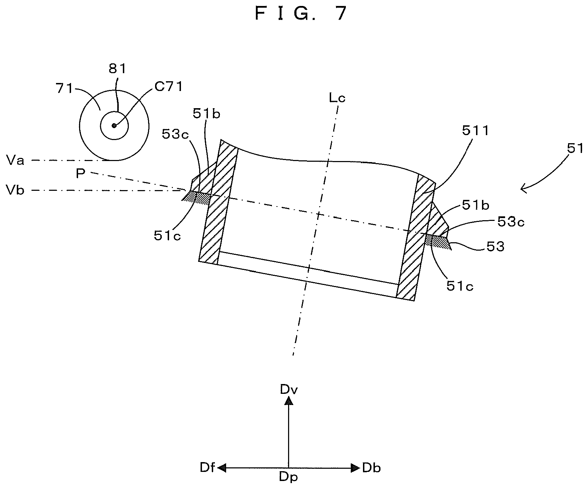

Next, a starter motor for starting the crankshaft 61 will be mainly described. Fig. 5 is a partial cross-sectional view showing a mechanism of transmitting a torque from a starter motor to a crankshaft. Fig. 6 is a partial cross-sectional view of the engine taken along a cutting line VI-VI shown in Fig. 5. Fig. 7 schematically shows the layout of the starter motor.

A starter motor 71 is arranged on the front side Df of the cylinder 511 and overlaps the cylinder 511 at least partially in a front view from the front side Df. In this way, the starter motor 71 is arranged on the opposite side of the transmission 66 across the cylinder 511, and the axis Lc of the cylinder 511 passes through between the starter motor 71 and the transmission 66. As particularly shown in Fig. 7, the starter motor 71 is above the cylinder mating surface 53c of the crankcase 53 in the vertical direction Dv. In other words, a bottom Va of the starter motor 71 is above a top Vb of the cylinder mating surface 53c of the crankcase 53. The position of the starter motor 71 is on the side of the cylinder head 52 with respect to a virtual plane P including the cylinder mating surface 53c of the crankcase 53, in other words, on the opposite side of the crankshaft 61 across the virtual plane P. The starter motor 71 is housed in a motor case 72 on the front side Df of the cylinder 511, in other words, on the opposite side of the transmission 66 across the cylinder 511. The starter motor 71 and the motor case 72 are attachable and detachable together to and from the crankcase 53. The rotational axis of the motor case 72 (motor rotational axis C71) is parallel to the crankshaft 61 (the crank axis C61 of the crankshaft 61).

The engine 5 transmits the output (torque) of the starter motor 71 to the crankshaft 61 using a multi-speed reducer 8. The multi-speed reducer 8 is configured using multiple (six) gears 81 to 86. More specifically, the driving gear 81 is attached to the output shaft of the starter motor 71 to be coaxial with the output shaft. The driving gear 81 rotates about the rotational axis (motor rotational axis C71) of the starter motor 71 in response to the rotation of the starter motor 71. The driven gear 82 having more teeth than the driving gear 81 is attached to the crankshaft 61 so as to be coaxial with the crankshaft 61. The driven gear 82 rotates about the crank axis C61 together with the crankshaft 61.

A double gear 834 and a double gear 856 are provided between the driving gear 81 and the driven gear 82 on a transmission path of the output (driving force) of the starter motor 71. The double gear 834 includes the input side gear 83 and the output side gear 84 having less teeth than the input side gear 83. The input side gear 83 and the output side gear 84 are arranged coaxially. The input side gear 83 is engaged with the driving gear 81. In response to input from the driving gear 81, the input side gear 83 and the output side gear 84 rotate integrally about a rotational axis C834. The double gear 856 includes the input side gear 85 and the output side gear 86 having less teeth than the input side gear 85. The input side gear 85 and the output side gear 86 are arranged coaxially. The input side gear 85 is engaged with the output side gear 84 of the double gear 834. In response to input from the double gear 834, the input side gear 85 and the output side gear 86 rotate integrally about a rotational axis C856. In this way, the multi-speed reducer 8 reduces the output of the starter motor 71 at three stages and transmits the reduced output to the crankshaft 61, thereby rotating the crankshaft 61.

In the foregoing engine 5, the cylinder 511 is tilted toward the transmission 66 so that the angle θ3 between the virtual half line Lh and the third virtual line segment L3 is less than 90°. By tilting the cylinder 511 toward the transmission 66 in this way, it becomes possible to ensure wide space on the opposite side of the transmission 66 (transmission opposite side) across the cylinder 511. The starter motor 71 is arranged on the transmission opposite side across the cylinder 511 and on the opposite side of the crankshaft 61 across the cylinder mating surface 53c. In this way, the motor is arranged through effective use of the space on the transmission opposite side of the cylinder 511. Further, the output of the starter motor 71 is reduced in speed by the multiple gears 81 to 86 and then transmitted to the crankshaft 61. Thus, output required for the starter motor 71 is small to allow size reduction of the starter motor 71. As a result, it becomes possible to ensure space for the arrangement of the starter motor 71 while the tilt of the cylinder 511 is suppressed.

In particular, in the engine 5 described herein as an example, the cylinder 511 is arranged in such a manner that the axis Lc of the cylinder 511 is tilted further toward the rear side Db at a higher position. By tilting the cylinder 511 toward the rear side Db in this way, it becomes possible to ensure wide space on the front side Df of the cylinder 511. The starter motor 71 is arranged on the front side Df of the cylinder 511 and above the cylinder mating surface 53c. In this way, the starter motor 71 is arranged through effective use of the space on the front side Df of the cylinder 511. Further, the output of the starter motor 71 is reduced in speed by the multiple gears 81 to 86 and then transmitted to the crankshaft 61. Thus, output required for the starter motor 71 is small to allow size reduction of the starter motor 71. As a result, it becomes possible to ensure space for the arrangement of the starter motor 71 on the front side Df of the cylinder 511 while the tilt of the cylinder 511 toward the rear side Db is suppressed. In this way, while the starter motor 71 is arranged on the front side Df of the cylinder 511, the tilt of the cylinder 511 toward the rear side Db can be suppressed.

The multiple gears 81 to 86 include the driving gear 81 attached to the output shaft of the starter motor 71, and the driven gear 82 attached to the crankshaft 61. Further, the double gears 834 and 856 arranged between the driving gear 81 and the driven gear 82 on the transmission path of driving force reduce the output of the starter motor 71 and transmit the reduced output to the crankshaft 61. Such speed reduction at multiple states using the double gears 834 and 856 can encourage size reduction of the starter motor 71 effectively. As a result, while the tilt of the cylinder 511 is suppressed, it becomes possible to ensure space for the arrangement of the starter motor 71 more reliably.

As shown in Fig. 5, as viewed from the direction of the rotational axis of the starter motor 71 (from the vehicle-width direction Dw), the rotational axes C834 and C856 of the gears 83 to 86 are located on the side of the crank axis C61 in respect with the motor rotational axis C71 in a direction Dc parallel to the cylinder mating surface 53c. This configuration reduces bulge of the engine 5 to contribute to size reduction of the engine 5 more effectively.

As shown in Fig. 5, as viewed from the direction of the rotational axis of the starter motor 71, respective far-side end portions of the multiple gears 81 to 86 from the axis Lc are located on the side of the axis Lc in respect with a far-side end portion of the motor case 72 from the axis Lc in the direction Dc parallel to the cylinder mating surface 53c. This configuration reduces bulge of the engine 5 to allow size reduction of the engine 5. The far-side end portion mentioned herein means one end portion of the opposite ends of a target object (gear, motor case) in the direction Dc and farther from the axis Lc.

As shown in Fig. 5, as viewed from the direction of the motor rotational axis of the starter motor 71 (motor rotational axis C71), gears other than the driving gear 81 and the driven gear 82, specifically, the gears 83 to 86 have the rotational axes C834 and C856 that fulfill predetermined positional relationships with the motor rotational axis C71. More specifically, all the motor rotational axis C71 and the rotational axes C834 and C856 are on the same side relative to the axis Lc of the cylinder 511 (in Fig. 5, on the left side). An acute angle α1 is provided between the axis Lc and a virtual line I1 passing through the motor rotational axis C71 and crank axis C61, an acute angle α2 is provided between the axis Lc and a virtual line 12 passing through the rotational axis C834 of the gears 83, 84 and the crank axis C61, an acute angle α3 is provided between the axis Lc and a virtual line 13 passing through the rotational axis C856 of the gears 85, 86 and the crank axis C61. The acute angle α1 is less than the acute angle α2 and less than the acute angle α3. More specifically, the starter motor 71 is arranged in such a manner that the motor rotational axis C71 is located on the side of the virtual half line Lh of the cylinder 511 in respect with the virtual lines 12 and 13 passing through the rotational axes C834 and C856 of the gears 83 to 86 respectively and the crank axis C61. This configuration reduces bulge of the engine 5 to contribute to size reduction of the engine 5 more effectively.

As described above, in the foregoing embodiment, the engine 5 corresponds to an example of an "engine" of the present invention. The cylinder 511 corresponds to an example of a "cylinder" of the present invention. The axis Lc corresponds to an example of the "axis of the cylinder" of the present invention. The virtual half line Lh corresponds to an example of a "virtual half line" of the present invention. The third virtual line segment L3 corresponds to an example of a "virtual line segment" of the present invention. The crankcase 53 corresponds to an example of a "crankcase" of the present invention. The cylinder mating surface 53c corresponds to an example of a "cylinder mating surface" of the present invention. The crankshaft 61 corresponds to an example of a "crankshaft" of the present invention. The transmission 66 corresponds to an example of a "transmission" of the present invention. The drive shaft 68 corresponds to an example of a "drive shaft" of the present invention. The starter motor 71 corresponds to an example of a "motor" of the present invention. The motor case 72 corresponds to an example of a "motor case" of the present invention. The multiple gears 81 to 86 correspond to examples of "multiple gears" of the present invention. The driving gear 81 corresponds to an example of a "driving gear" of the present invention. The driven gear 82 corresponds to an example of a "driven gear" of the present invention. The input side gear 83 and the input side gear 85 each correspond to an example of an "input side gear" of the present invention. The output side gear 84 and the output side gear 86 each correspond to an example of an "output side gear" of the present invention. The double gear 834 and the double gear 856 each correspond to an example of a "double gear" of the present invention. The motorcycle 1 corresponds to an example of a "vehicle" of the present invention. The front wheel 34 and the rear wheel 37 correspond to examples of a "wheel" of the present invention.

The present invention is not limited to the foregoing embodiment. Various changes other than those described above are applicable within a range not deviating from the substance of the invention. Regarding the number of the multiple gears 81 to 86 making up the multi-speed reducer 8, for example, this number can be changed, if appropriate, as long as it is two or more.

The arrangement of the multiple gears 81 to 86 making up the multi-speed reducer 8 can also be changed, if appropriate. Thus, the respective far-side end portions of the multiple gears 81 to 86 from the axis Lc are not required to be closer to the axis Lc than the far-side end portion of the motor case 72 from the axis Lc. A far-side end portion of any of the gears from the axis Lc may be located at an opposite side of the axis Lc across the far-side end portion of the motor case 72 from the axis Lc.

Both the rotational axes C834 and C856 of the gears 83 to 86 are not always required to be located closer to the crankshaft 61 than the motor rotational axis C71 in the direction Dc. For example, only the rotational axis of one of the gears 83 to 86 may be located closer to the crankshaft 61 than the motor rotational axis C71, and the rotational axes of the other gears may be located at an opposite side of the crankshaft 61 across the motor rotational axis C71. In this case, the rotational axis of at least one of the gears 83 to 86 may be configured to be located closer to the crankshaft 61 than the motor rotational axis C71 in the direction Dc. This configuration reduces bulge of the engine 5 to contribute to size reduction of the engine 5.

The intake and exhaust valve mechanism provided at the engine 5 is not limited to a mechanism of the foregoing DOHC type but it may also be a mechanism of a different type such as a single over head camshaft (SOHC). Further, a system for driving the intake valve 523 and the exhaust valve 527 is not limited to the foregoing direct-drive system but it may also be a different system such as a rocker arm system.

The specific configuration of the crankcase 53 can be changed, if appropriate. Thus, the crankcase 53 is not always required to include the reservoir part 55 integrally, for example.

The position or angle for attaching the engine 5 to the vehicle body frame 2 is not limited to that described in the foregoing example but can be changed, if appropriate.

### [INDUSTRIAL APPLICABILITY]

The present invention is applicable to every type of engine provided with a motor that starts the rotation of a crankshaft, and to every type of vehicle comprising the engine.

### [REFERENCE SIGNS LIST]

- 1: motorcycle (vehicle)
- 34: front wheel (wheel)
- 37: rear wheel (wheel)
- 5: engine
- 511: cylinder
- 53: crankcase
- 53c: cylinder mating surface
- 61: crankshaft
- 66: transmission
- 68: drive shaft
- 71: starter motor (motor)
- 72: motor case
- 81-86: multiple gear
- 81: driving gear
- 82: driven gear
- 83: input side gear
- 84: output side gear
- 85: input side gear
- 86: output side gear
- 834: double gear
- 856: double gear
- Lc: axis (axis of cylinder)
- Lh: virtual half line
- L3: third virtual line segment (virtual line segment)

## Claims

1. A single-cylinder type engine (5) comprising:
a cylinder (511);
a crankcase (53) in mating contact with the cylinder (511) at a cylinder mating surface (53c) and attached to the cylinder (511);
a crankshaft (61) rotatable about a crank axis (C61), at least a part of the crankshaft (61) being arranged in the crankcase (53);
a transmission (66) that outputs the rotation of the crankshaft (61) from a drive shaft (68) rotatable about a drive axis (C68), at least a part of the transmission (66) being arranged in the crankcase (53);
a motor (71); and
multiple gears (81-86) that reduce an output of the motor (71) and transmit a reduced output to the crankshaft (61), wherein
the cylinder (511) is tilted toward the transmission (66) so that an angle between a virtual half line (Lh) and a virtual line segment (L3) is less than 90°, the virtual half line (Lh) extending parallel to an axis (Lc) of the cylinder (511) toward the cylinder (511) from the crank axis (C61), the virtual line segment (L3) extending between the crank axis (C61) and the drive axis (C68), and
the motor (71) is arranged on the opposite side of the transmission (66) across the cylinder (511), with a rotational axis (C71) of the motor (71) being parallel to the crankshaft (61),
**characterized in that**
the motor (71) is arranged on the opposite side of the crankshaft (61) across the cylinder mating surface (53c).

2. The single-cylinder type engine (5) according to claim 1, wherein
the multiple gears (81-86) include a driving gear (81) attached to an output shaft of the motor (71), a driven gear (82) attached to the crankshaft (61), and a double gear (834;856) located between the driving gear (81) and the driven gear (82) on a transmission path of driving force, the double gear (834;856) including an input side gear (83;85) and an output side gear (84;86) arranged coaxially, the input side gear (83;85) receiving the driving force from the driving gear (81), the output side gear (84;86) outputting the driving force to the driven gear (82), and
the multiple gears (81-86) reduce the output of the motor (71) and transmit the reduced output to the crankshaft (61).

3. The single-cylinder type engine (5) according to claim 2, wherein
as viewed from a direction of the rotational axis (C71) of the motor (71), at least one of the multiple gears (81-86) other than the driving gear (81) and the driven gear (82) has a rotational axis (C834;C856) located closer to the crankshaft (61) than the rotational axis (C71) of the motor (71) in a direction parallel to the cylinder mating surface (53c).

4. The single-cylinder type engine (5) according to claim 2, wherein
as viewed from a direction of the rotational axis (C71) of the motor (71), each gear of the multiple gears (81-86) other than the driving gear (81) and the driven gear (82) has a rotational axis (C834;C856) located closer to the crankshaft (61) than the rotational axis (C71) of the motor (71) in a direction parallel to the cylinder mating surface (53c).

5. The single-cylinder type engine (5) according to any one of claims 1 to 4, further comprising a motor case (72) housing the motor (71), wherein
as viewed from a direction of the rotational axis (C71) of the motor (71), respective far-side end portions of the multiple gears (81-86) from an axis (Lc) of the cylinder (511) are located closer to the axis (Lc) of the cylinder (511) than a far-side end portion of the motor case (72) from the axis (Lc) of the cylinder (511) in a direction parallel to the cylinder mating surface (53c).

6. The single-cylinder type engine (5) according to any one of claims 2 to 4 or according to both claims 2 and 5, wherein
as viewed from a direction of the rotational axis (C71) of the motor (71), the rotational axis (C71) of the motor (71) is located closer to an axis (Lc) of the cylinder (511) than a line (I2;I3) passing through the rotational axis (C856;C834) of a gear other than the driving gear (81) and the driven gear (82) and the crank axis (C61).

7. A vehicle comprising:
the single-cylinder type engine (5) according to any one of claims 1 to 6; and
a wheel (37) to be driven by the single-cylinder type engine (5).

## Patentansprüche

1. Ein Einzylindermotor (5) umfassend:
einen Zylinder (511);
ein Kurbelgehäuse (53), das mit dem Zylinder (511) an einer Zylindereingriffsfläche (53c) in Eingriff steht und an dem Zylinder (511) befestigt ist;
eine Kurbelwelle (61), die um eine Kurbelachse (C61) drehbar ist, wobei zumindest ein Teil der Kurbelwelle (61) in dem Kurbelgehäuse (53) angeordnet ist;
ein Getriebe (66), das die Drehung der Kurbelwelle (61) von einer um eine Antriebsachse (C68) drehbaren Antriebswelle (68) abgibt, wobei zumindest ein Teil des Getriebes (66) in dem Kurbelgehäuse (53) angeordnet ist;
ein Motor (71); und
mehrere Zahnräder (81-86), die eine Leistung des Motors (71) reduzieren und eine reduzierte Leistung auf die Kurbelwelle (61) übertragen, wobei
der Zylinder (511) in Richtung des Getriebes (66) geneigt ist, so dass ein Winkel zwischen einer virtuellen Halblinie (Lh) und einem virtuellen Liniensegment (L3) weniger als 90° beträgt, wobei sich die virtuelle Halblinie (Lh) parallel zu einer Achse (Lc) des Zylinders (511) von der Kurbelachse (C61) in Richtung des Zylinders (511) erstreckt, wobei sich das virtuelle Liniensegment (L3) zwischen der Kurbelachse (C61) und der Antriebsachse (C68) erstreckt, und
der Motor (71) auf der gegenüberliegenden Seite des Getriebes (66) quer zum Zylinder (511) angeordnet ist, wobei eine Rotationsachse (C71) des Motors (71) parallel zur Kurbelwelle (61) ist,
**dadurch gekennzeichnet dass**
der Motor (71) auf der gegenüberliegenden Seite der Kurbelwelle (61) quer zur Zylindereingriffsfläche (53c) angeordnet ist.

2. Der Einzylindermotor (5) gemäß Anspruch 1, wobei
die mehreren Zahnräder (81-86) ein an einer Ausgangswelle des Motors (71) befestigtes Antriebszahnrad (81), ein an der Kurbelwelle (61) befestigtes Abtriebszahnrad (82) und ein zwischen dem Antriebszahnrad (81) und dem Abtriebszahnrad (82) auf einem Übertragungsweg der Antriebskraft angeordnetes Doppelzahnrad (834; 856) umfassen, wobei das Doppelzahnrad (834; 856) ein eingangsseitiges Zahnrad (83; 85) und ein ausgangsseitiges Zahnrad (84; 86) aufweist, die koaxial angeordnet sind, wobei das eingangsseitige Zahnrad (83; 85) die Antriebskraft von dem Antriebszahnrad (81) aufnimmt und das ausgangsseitige Zahnrad (84; 86) die Antriebskraft an das Abtriebszahnrad (82) abgibt, und
die mehreren Zahnräder (81-86) die Leistung des Motors (71) reduzieren und die reduzierte Leistung auf die Kurbelwelle (61) übertragen.

3. Der Einzylindermotor (5) gemäß Anspruch 2, wobei
aus einer Richtung der Drehachse (C71) des Motors (71) gesehen, mindestens eines der mehreren Zahnräder (81-86), das nicht das Antriebszahnrad (81) und das Abtriebszahnrad (82) ist, eine Drehachse (C834; C856) aufweist, die in einer Richtung parallel zu der Zylindereingriffsfläche (53c) näher an der Kurbelwelle (61) liegt als die Drehachse (C71) des Motors (71).

4. Der Einzylindermotor (5) gemäß Anspruch 2, wobei
aus einer Richtung der Drehachse (C71) des Motors (71) gesehen, jedes Zahnrad der mehreren Zahnräder (81-86) mit Ausnahme des Antriebszahnrads (81) und des Abtriebszahnrads (82) eine Drehachse (C834; C856) hat, die in einer Richtung parallel zu der Zylindereingriffsfläche (53c) näher an der Kurbelwelle (61) liegt als die Drehachse (C71) des Motors (71).

5. Der Einzylindermotor (5) gemäß einem der Ansprüche 1 bis 4, des Weiteren umfassend
ein Motorgehäuse (72), das den Motor (71) aufnimmt, wobei
aus einer Richtung der Drehachse (C71) des Motors (71) gesehen, jeweilige entfernte Endabschnitte der mehreren Zahnräder (81-86) von einer Achse (Lc) des Zylinders (511) in einer Richtung parallel zu der Zylinderanschlußfläche (53c) näher an der Achse (Lc) des Zylinders (511) angeordnet sind als ein entfernter Endabschnitt des Motorgehäuses (72) von der Achse (Lc) des Zylinders (511).

6. Der Einzylindermotor (5) gemäß einem der Ansprüche 2 bis 4 oder gemäß den beiden Ansprüchen 2 und 5, wobei
die Drehachse (C71) des Motors (71), aus einer Richtung der Drehachse (C71) des Motors (71) gesehen, näher an einer Achse (Lc) des Zylinders (511) liegt als eine Linie (I2; I3), die durch die Drehachse (C856; C834) eines anderen Zahnrads als des Antriebszahnrads (81) und des Abtriebszahnrads (82) und die Kurbelachse (C61) verläuft.

7. Ein Fahrzeug umfassend:
den Einzylindermotor (5) gemäß einem der Ansprüche 1 bis 6; und
ein Rad (37), das von dem Einzylindermotor (5) angetrieben wird.

## Revendications

1. Moteur de type monocylindre (5) comprenant :
un cylindre (511) ;
un carter de bas-moteur (53) en contre-contact avec le cylindre (511) au niveau d'une surface de contre-contact de cylindre (53c) et rattaché au cylindre (511) ;
un vilebrequin (61) mobile en rotation autour d'un axe de vilebrequin (C61), au moins une partie du vilebrequin (61) étant disposée dans le carter de bas-moteur (53) ;
une transmission (66) qui produit en sortie la rotation du vilebrequin (61) depuis un arbre d'entraînement (68) mobile en rotation autour d'un axe d'entraînement (C68), au moins une partie de la transmission (66) étant disposée dans le carter de bas-moteur (53) ;
un moteur (71) ; et
plusieurs pignons (81-86) qui réduisent une sortie du moteur (71) et transmettent une sortie réduite du vilebrequin (61), dans lequel
le cylindre (511) est incliné vers la transmission (66) de sorte qu'un angle entre une demi-ligne virtuelle (Lh) et un segment de ligne virtuel (L3) est inférieur à 90 °, la demi-ligne virtuelle (Lh) s'étendant parallèle à un axe (Lc) du cylindre (511) vers le cylindre (511) depuis l'axe de vilebrequin (C61), le segment de ligne virtuel (L3) s'étendant entre l'axe de vilebrequin (C61) et l'axe d'entraînement (C68), et
le moteur (71) est disposé sur le côté opposé de la transmission (66) à travers le cylindre (511), avec un axe de rotation (C71) du moteur (71) parallèle au vilebrequin (61),
**caractérisé en ce que**
le moteur (71) est disposé sur le côté opposé du vilebrequin (61) à travers la surface de contre-contact de cylindre (53c).

2. Le moteur de type monocylindre (5) selon la revendication 1, dans lequel
les plusieurs pignons (81-86) incluent un pignon d'entraînement (81) rattaché à un arbre de sortie du moteur (71), un pignon entraîné (82) rattaché au vilebrequin (61), et un double pignon (834 ; 856) placé entre le pignon d'entraînement (81) et le pignon entraîné (82) sur un chemin de transmission de force d'entraînement, le double pignon (834 ; 856) incluant un pignon de côté d'entrée (83 ; 85) et un pignon de côté de sortie (84 ; 86) disposés coaxialement, le pignon de côté d'entrée (83 ; 85) recevant la force d'entraînement du pignon d'entraînement (81), le pignon de côté de sortie (84 ; 86) transmettant en sortie la force d'entraînement au pignon entraîné (82), et
les plusieurs pignons (81-86) réduisent la sortie du moteur (71) et transmettent la sortie réduite au vilebrequin (61).

3. Le moteur de type monocylindre (5) selon la revendication 2, dans lequel
tel que visualisé depuis une direction de l'axe de rotation (C71) du moteur (71), au moins un des plusieurs pignons (81-86) autre que le pignon d'entraînement (81) et le pignon entraîné (82) présente un axe de rotation (C834 ; C856) placé plus près du vilebrequin (61) que l'axe de rotation (C71) du moteur (71) dans une direction parallèle à la surface de contre-contact de cylindre (53c).

4. Le moteur de type monocylindre (5) selon la revendication 2, dans lequel
tel que visualisé depuis une direction de l'axe de rotation (C71) du moteur (71), chaque pignon des plusieurs pignons (81-86) autre que le pignon d'entraînement (81) et le pignon entraîné (82) présente un axe de rotation (C834 ; C856) placé plus près du vilebrequin (61) que l'axe de rotation (C71) du moteur (71) dans une direction parallèle à la surface de contre-contact de cylindre (53c).

5. Le moteur de type monocylindre (5) selon l'une quelconque des revendications 1 à 4, comprenant en outre un boîtier de moteur (72) abritant le moteur (71), dans lequel
tel que visualisé depuis une direction de l'axe de rotation (C71) du moteur (71), des parties extrémité de côté éloigné respectives des plusieurs pignons (81-86) depuis un axe (Lc) du cylindre (511) sont placées plus proches de l'axe (Lc) du cylindre (511) qu'une partie extrémité de côté éloigné du carter de moteur (72) depuis l'axe (Lc) du cylindre (511) dans une direction parallèle à la surface de contre-contact de cylindre (53c).

6. Le moteur de type monocylindre (5) selon l'une quelconque des revendications 2 à 4, ou selon les deux revendications 2 et 5, dans lequel
tel que visualisé depuis une direction de l'axe de rotation (C71) du moteur (71), l'axe de rotation (C71) du moteur (71) est placé plus près d'un axe (Lc) du cylindre (511) qu'une ligne (I2 ; I3) passant à travers l'axe de rotation (C856 ; C834) d'un pignon autre que le pignon d'entraînement (81) et le pignon entraîné (82) et l'axe de vilebrequin (C61).

7. Véhicule comprenant :
le moteur de type monocylindre (5) selon l'une quelconque des revendications 1 à 6 ; et
une roue (37) à entraîner par le moteur de type monocylindre (5).
